# EUROPÄISCHE PATENTSCHRIFT

(11) **EP 2 986 683 B1**
(45) Veröffentlichungstag und Bekanntmachung des Hinweises auf die Patenterteilung: **21.03.2018**
(21) Anmeldenummer: 14715006.4
(22) Anmeldetag: 03.04.2014
(51) Int. Cl.: C09J 7/00, C09J 153/02, B32B 7/12

(54) **VERWENDUNG EINER HAFTKLEBEMASSE IN EINEM HAFTKLEBSTREIFEN**
USE OF A SELF-ADHESIVE COMPOUND IN AN ADHESIVE TAPE
UTILISATION D'UNE MASSE ADHÉSIVE DANS UNE BANDE ADHÉSIVE

(30) Priorität: 15.04.2013 DE 102013206624
(43) Veröffentlichungstag der Anmeldung: 24.02.2016
(73) Patentinhaber: tesa SE, 22848 Norderstedt (DE)
(72) Erfinder: SCHMITZ-STAPELA, Daniel, 22529 Hamburg (DE); KRAWINKEL, Thorsten, 22457 Hamburg (DE); DOLLASE, Thilo, 22397 Hamburg (DE); PETERSEN, Anika, 24576 Bimöhlen (DE); STRIBERNY, Tanja, 20357 Hamburg (DE); WESTPHAL, Andreas, 21629 Neu Wulmstorf (DE)
(86) Internationale Anmeldenummer: PCT/EP2014/056664
(87) Internationale Veröffentlichungsnummer: WO 2014/170132

(56) Entgegenhaltungen:
- EP-A1- 1 418 215
- WO-A1-2006/115861
- DE-A1- 19 708 366

## Beschreibung

Die Erfindung betrifft die Verwendung einer Haftklebemasse in einem Haftklebstreifen aus einer Schicht, der sich durch dehnendes Verstrecken im Wesentlichen in der Verklebungsebene rückstands- und zerstörungsfrei wieder ablösen lässt.

Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften.

Darunter fallen insbesondere Massen, die haftklebende Eigenschaften entsprechend dem "Handbook of Pressure Sensitive Adhesive Technology" von Donatas Satas (Satas & Associates, Warwick 1999) besitzen, insbesondere solche, die das Dahlquist-Kriterium erfüllen.

Elastisch oder plastisch hochdehnbare Haftklebestreifen, welche sich durch dehnendes Verstrecken in der Verklebungsebene rückstands- und zerstörungsfrei wieder ablösen lassen, sind beispielsweise aus der US 4,024,312 A, DE 33 31 016 C2, WO 92/01132 A1, WO 92/11333 A1, DE 42 22 849 A1, WO 95/06691 A1, DE 195 31 696 A1, DE 196 26 870 A1, DE 196 49 727 A1, DE 196 49 728 A1, DE 196 49 729 A1, DE 197 08 364 A1, DE 197 20 145 A1, DE 198 20 854 A1 und DE 100 03 318 A1 bekannt und werden nachfolgend auch als stripfähige Haftklebestreifen bezeichnet.

Eingesetzt werden solche stripfähigen Selbstklebebänder häufig in Form von ein- oder beidseitig haftklebrigen Klebefolienstreifen, die bevorzugt einen nicht haftklebrigen Anfassbereich aufweisen, von welchem aus der Ablöseprozess eingeleitet wird.

Einsatzgebiete vorgenannter stripfähiger Haftklebestreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel wie zum Beispiel Stecknadeln, Pin-Nadeln, Heftzwecken, Nägel, Schrauben, klassische Selbstklebebänder und Flüssigklebstoffe. Wesentlich für den erfolgreichen Einsatz der Haftklebestreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung im Wohn-, Arbeits-und Bürobereich dienen zu können.
Derartige Haftklebestreifen sind mit den tesa Powerstrips ® und 3M Command Adhesives kommerziell erhältlich.

Eine sehr hohe Halteleistung lässt sich bis heute kommerziell nur mit Styrol-Blockcopolymer basierenden Haftklebemassen realisieren. Die Styrol-Blockcopolymere enthalten dabei stets ungesättigte Polydien-Blöcke. Polydiene sind intrinsisch anfällig gegenüber thermooxidativer Alterung und können durch Strahlung und Ozon geschädigt werden.

Ein weiterer wesentlicher Aspekt derartiger Streifen, insbesondere, wenn diese an transparenten Flächen wie Fenstern verwendet werden sollen, ist deren Transparenz. tesa vermarktet stripbare transparente Produkte mit moderater Halteleistung als tesa Powerstrips ® Deco. 3M bietet transparente Klebestrips mit einer Halteleistung von bis zu 900 g an.

Konzepte, transparente stripbare Klebeprodukte zu schaffen, umfassen die Nutzung von Styrol-Blockcopolymeren, die hydrierte Polydien-Blöcke enthalten (DE 10 2007 021 504 A1 und US 7,309,524 B). Obwohl hohe Transparenz und verbesserte Alterungsstabilität mit der geschilderten Lösung möglich werden, sind die gefordert hohen Klebeleistungen und besonders die Reißfestigkeit über diese Formulierungskonzepte nicht zu erreichen.

Die EP 1 418 212 A1 beschreibt transparente, rückstands- und zerstörungsfrei wiederablösbare Klebestreifen, die dreilagig konzipiert sind. Dabei trägt die Mittelschicht den Hauptteil der mechanischen Eigenschaften zu den Produkteigenschaften bei, ist aber aufgrund der Formulierung instabil gegenüber UV-Licht und Ozon. Die Außenschichten übernehmen eine Filterfunktion gegenüber Ozon und UV-Licht. Nachteilig an diesem Konzept ist die Mehrschichtigkeit, die einen mehrstufigen Produktionsprozess erfordert. Zudem sind die erreichbaren Halteleistungen limitiert bedingt durch die die Außenschichten bildende Klebemasseformulierung.

Ferner sind Polyacrylat basierende Systeme bekannt (WO 2010/077541 A1; WO 2010/078346 A1; WO 2010/077435 A1; US 6,723,407 B1), und es werden zudem Polysiloxan basierende Klebestrips beschrieben, unter anderem in der US 6,569,521 B1 und der WO 2009/114683 A1. Vorteilhaft sind deren optischen Eigenschaften und die Beständigkeit. Die Zug/Dehnungs-Eigenschaften und die Balance aus Halteleistung und Klebleistung sind jedoch nicht auf dem Niveau, dass Hochleistungsklebestrips erzeugt werden können. Zum Teil können dabei ausreichende Reißfestigkeiten nur durch Nutzung eines Trägers erreicht werden.

EP 1 418 215 A1 betrifft eine Klebemasse für einen Haftklebfolienstreifen aus mindestens einer Schicht, der sich durch dehnendes Verstrecken im Wesentlichen in der Verklebungsebene rückstands- und zerstörungsfrei wieder ablösen lässt, wobei die Klebemasse mindestens ein Blockcopolymer mit ein oder zwei endständigen Blöcken, bestehend aus Vinylaromaten, und einem Block bestehend aus einem konjugierten Dien, bei dem der Anteil an 1,2-verknüpftem Dien selektiv hydriert ist, enthält.

WO 2006/115861 A1 betrifft eine Haftklebemassezusammensetzung, wobei die Haftklebemassezusammensetzung umfasst: 20 Gew.-% bis 60 Gew.-% einer elastomeren Komponente, die ein Blockcopolymer mit einem Anteil an thermoplastischem Block eines vinylsubstituierten aromatischen Kohlenwasserstoffs und einem Anteil an elastomerem Block von konjugiertem Dien umfasst, mindestens 20 Gew.-% eines festen klebrigen Harzes mit einem Erweichungspunkt (Ring & Ball) von mindestens 115 °C oder einer Glasübergangstemperatur von mindestens 70 °C, und 5 Gew.-% bis 20 Gew.-% eines flüssigen klebrigen Harzes.

DE 197 08 366 A1 betrifft einen Klebfolienstreifen für eine wieder lösbare Verklebung, der sich durch Ziehen in Richtung der Verklebungsebene rückstandsfrei und beschädigungslos ablösen lässt, mit einem Schichtaufbau aus einer elastischen Trägerschicht, die einseitig oder beidseitig mit einer Klebstoffschicht versehen ist, dadurch gekennzeichnet, dass sowohl die Trägerschicht als auch die Klebstoffschicht(en) als Basispolymere Styrolblockcopolymere enthalten, abgemischt mit Klebharzen, welche mit dem Elastomerblock der verwendeten Styrolblockcopolymeren verträglich sind.

Trägerhaltige oder mehrschichtige Produkte haben stets den Nachteil, dass entweder sehr spezielle Maschinen für die Herstellung benötigt werden oder eine Vielzahl von einzelnen Prozessschritten durchgeführt werden muss. Beides wirkt sich nachteilig auf die Herstellkosten aus.

Es besteht daher die Aufgabe, Haftklebemassen zur Verfügung zu stellen, die eine hohe Halte- und Klebeleistung, hohe Transparenz, geringe Tönung und ausreichende Stabilität gegenüber Licht, Wärme und Ozon und eine ausreichende Reißfestigkeit aufweisen, sowie solche Haftklebemassen enthaltende Selbstklebeprodukte. Entsprechende Selbstklebeprodukte sind vorzugsweise einschichtig (trägerfrei) gestaltet.

Gelöst wird diese Aufgabe durch die Verwendung einer Haftklebemasse in einem ein- oder beidseitig klebenden Klebfolienstreifen, der trägerfrei und somit nur einlagig ausgeführt ist, wie sie in den Hauptansprüchen niedergelegt ist. Gegenstand der Unteransprüche sind dabei vorteilhafte Weiterbildungen der Verwendungen der Haftklebemasse in Haftklebestreifen.

Demgemäß betrifft die Erfindung die Verwendung einer Haftklebemasse in einem ein- oder beidseitig klebenden Klebfolienstreifen, der trägerfrei und somit nur einlagig ausgeführt ist, wobei die Haftklebemasse zumindest enthält
(a) zumindest ein Elastomer, wobei das Elastomer einen Anteil von mindestens 40 Gew.-% bezogen auf die Klebemassenzusammensetzung aufweist und wobei als Elastomer zumindest eine Sorte eines Polybutadien-Blockcopolymers eingesetzt ist,
(b) zumindest ein teilhydriertes Kohlenwasserstoffharz (Harzsorte 1) mit einer Erweichungstemperatur von mindestens 90 °C,
(c) gegebenenfalls zumindest ein weiteres Kohlenwasserstoffharz, ein Terpenphenolharz und/oder ein Kolophoniumharz mit einer Erweichungstemperatur von mindestens 90 °C (Harzsorte 2),
(d) gegebenenfalls ein Weichharz mit einer Schmelzviskosität bei 25 °C und 1 Hz von zumindest 25 Pa*s und einer Erweichungstemperatur von < 25 °C,
(e) gegebenenfalls weitere Additive,
wobei der tan δ der Haftklebemasse bei Anwendungstemperatur (hier 25 °C) bei 10 rad/s bei mindestens 0,20 und bei 100 rad/s bei mindestens 0,40 liegt.

Die Erfindung betrifft zudem die Verwendung einer Haftklebemasse in einem ein- oder beidseitig klebenden Klebfolienstreifen, der trägerfrei und somit nur einlagig ausgeführt ist, wobei die Haftklebemasse zumindest enthält
(a) zumindest ein Elastomer, wobei das Elastomer einen Anteil von mindestens 40 Gew.-% bezogen auf die Klebemassenzusammensetzung aufweist und wobei als Elastomer zumindest eine Sorte eines Polybutadien-Blockcopolymers eingesetzt ist,
(b) zumindest ein nicht hydriertes Kohlenwasserstoffharz (Harzsorte 1) mit einer Erweichungstemperatur von mindestens 90 °C,
(c) zumindest ein weiteres zumindest teilhydriertes oder disproportioniertes Kohlenwasserstoffharz, Terpenphenolharz und/oder Kolophoniumharz mit einer Erweichungstemperatur von mindestens 90 °C (Harzsorte 2),
(d) gegebenenfalls ein Weichharz mit einer Schmelzviskosität bei 25 °C und 1 Hz von zumindest 25 Pa*s und einer Erweichungstemperatur von < 25 °C,
(e) gegebenenfalls weitere Additive,
wobei der tan δ der Haftklebemasse bei Anwendungstemperatur (hier 25 °C) bei 10 rad/s bei mindestens 0,20 und bei 100 rad/s bei mindestens 0,40 liegt.

Die Haftklebemasse ist vorteilhaft so formuliert, dass sie ein spezielles viskoelastisches Verhalten aufweist. Viskoelastisches Verhalten zeigen viele Polymere und alle Haftklebemassen. Ihre mechanischen Eigenschaften zeichnen sich durch eine Kombination aus elastischen und viskosen Anteilen aus (siehe zur Viskoelastizität zum Beispiel J. D. Ferry, Viscoelastic Properties of Polymers, 3. Aufl., 1980, J. Wiley, Hoboken, Seiten 1 bis 3). Der Grund hierfür ist die geforderte Ozonbeständigkeit, die neben den chemischen Eigenschaften der Rezepturbestandteile (K. W. Ho, J. Polym. Sci. A- Polym. Chem., 1986, 24, Seiten 2467 bis 2482) und der etwaigen Wirkung von Ozonschutzmitteln (H. Fries, Gummi Fasern Kunststoffe, 1987, 40, Seiten 238 bis 257; R. F. Ohm, Rubber World, 1993, 208, Seiten 18 bis 22) bei dehnbaren Materialien auch von den mechanischen Eigenschaften (M. Braden, A. N. Gent, J. Appl. Polym. Sci., 1960, 3, Seiten 90 bis 99) abhängt.

Die Ozonbeständigkeit ist von besonderer Relevanz für den Ablöseprozess der Klebestrips. Sofern der Ablöseprozess unter Dehnung stattfindet, was die Vermeidung von Untergrundzerstörung und Klebemasserückständen ermöglicht, ist eine hohe Reißfestigkeit der Klebestrips erwünscht. Die Reißfestigkeit lässt sich durch Blockcopolymere gut einstellen, jedoch kann Ozonschädigung die Reißanfälligkeit deutlich negativ beeinflussen.

Die gängigen Wege zur Verbesserung der Ozonbeständigkeit in Kautschukformulierungen sind für transparente Klebestrips nicht geeignet. So führt die Additivierung mit Wachsen, die einen dünnen Oberflächenfilm auf der Kautschukformulierung bilden, der als Barriere gegenüber Ozon wirkt, zu einer Verringerung der selbstklebenden Eigenschaften des Klebestrips. Chemische Antiozonantien sind stets farbig und führen auch bei geringen Zuschlagmengen zu erkennbaren Tönungen der transparenten Klebestrips. Polybutadien basierende Blockcopolymere zeichnen sich insgesamt durch eine bessere Alterungsstabilität aus als Polyisopren basierende Systeme, so dass erfindungsgemäße Formulierungen Polybutadien basierende Blockcopolymeren als Elastomerkomponente enthalten.

Entsprechend der Lehre von Gent (M. Braden, A. N. Gent, J. Appl. Polym. Sci., 1960, 3, Seiten 90 bis 99) haben auch die viskoelastischen Eigenschaften einen Einfluss auf die Ozonbeständigkeit. Dies lässt sich für Polybutadien-Blockcopolymer haltige Systeme vor Augen führen, indem man die Ozonbeständigkeit von reinen (unformulierten) Polybutadien-Blockcopolymeren untersucht und die Ergebnisse mit Klebemassen vergleicht, die dieselben Polybutadien-Blockcopolymere enthalten, aber bereits mit Klebharzen formuliert sind. Die reinen Polybutadien-Blockcopolymere sind aufgrund ihrer in den Polybutadien-Blöcken enthaltenen Doppelbindungen chemisch reaktiv gegenüber Ozon (K. W. Ho, J. Polym. Sci. A - Polym. Chem., 1986, 24, Seiten 2467 bis 2468). Als möglicher Mechanismus wird der sogenannte Criegee-Mechanismus angenommen, über den bei Angriff der Hauptkettendoppelbindung Kettenspaltung im Polybutadienblock erfolgen kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G'), Verlustmodul (G") sowie der als Verlustfaktor tan δ (tan delta) bezeichnete Quotient G"/G' herangezogen werden (siehe hierzu Test J). G' ist ein Maß für den elastischen Anteil, G" ein Maß für den viskosen Anteil eines Stoffes. Beide Größen sind abhängig von der Deformationsfrequenz und der Temperatur.
Der Verlustfaktor tan δ ist ein Maß für die Elastizität und das Fließvermögen der untersuchten Substanz.
Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation γ (gamma) gegenüber dem Einbringen der Schubspannung T (tau) gemessen. Dieser zeitliche Versatz (Phasenverschiebung zwischen Schubspannungs- und Deformationsvektor) wird als Phasenwinkel δ (delta) bezeichnet. Es gelten

| | |
|---|---|
| Speichermodul G' | G' = T/γ •cos(δ) |
| Verlustmoduls G" | G" = T/γ •sin(δ) |
| Verlustfaktor tan δ | tan δ = G'/G" |

Die Angaben der vorgenannten Parameter im Rahmen dieser Schrift beziehen sich auf die Messung mittels eines Rheometer in Platte-auf-Platte-Konfiguration, bezogen auf eine runde Probe mit einem Probendurchmesser von 25 mm und einer Probendicke von 1 mm. Die Temperatur beträgt 25 °C, im Übrigen herrschen Normbedingungen.

Erfindungsgemäß ist unvorhersehbarerweise festgestellt worden, dass Klebemasseformulierungen für transparente rückstandsfrei wiederablösefreie Klebestrips dann nicht nur im Hinblick auf klebtechnische Eigenschaften vorteilhaft sind, sondern auch anwendungsrelevante Ozonresistenz aufweisen, wenn sie ein spezielles viskoelastisches Verhalten aufweisen, und zwar so eingestellt sind, dass der tan δ bei Anwendungstemperatur (hier 25 °C) bei 10 rad/s (Frequenz der oszillierenden Scherbeanspruchung) bei mindestens 0,20 und bei 100 rad/s bei mindestens 0,40 liegt (nach Test J). Bevorzugt liegt der tan δ bei Anwendungstemperatur (hier 25 °C) bei 10 rad/s bei höchstens 0,40 und bei 100 rad/s bei höchstens 1,00.

Als Elastomer kommt zu mindestens 90 Gew.-% (bezogen auf die Elastomergesamtmenge) ein Polybutadien-Blockcopolymer oder ein Gemisch aus verschiedenen Polybutadien-Blockcopolymeren zum Einsatz. Dieses Polybutadien-Blockcopolymer beziehungsweise diese Polybutadien-Blockcopolymere sind solche, die Polymerblöcke überwiegend gebildet von Vinylaromaten (A-Blöcke), bevorzugt Styrol, und solche überwiegend gebildet durch Polymerisation von 1,3-Butadien (B-Blöcke) enthalten. Das Polybutadien-Blockcopolymer ist im Polybutadienblock nicht hydriert.

Zumindest ein Polybutadien-Blockcopolymer ist gemäß einer bevorzugten Ausführungsform der Erfindung ein Triblockcopolymer oder ein höheres Multiblockcopolymer mit zumindest zwei A-Blöcken. Dieses kann als Triblockcopolymer eine lineare A-B-A-Struktur aufweisen. Einsetzbar sind ebenfalls Blockcopolymere von radialer Gestalt sowie sternförmige und lineare Multiblockcopolymere. Sämtliche der vorgenannten Polymere können alleine oder im Gemisch miteinander genutzt werden. Als weitere Komponenten können A-B-Zweiblockcopolymere vorhanden sein. Die gewichtsmittlere Molmasse der Blockcopolymere liegt üblicherweise zwischen 50 000 g/mol und 500 000 g/mol, bevorzugt zwischen 75 000 g/mol und 200 000 g/mol.

Vorzugsweise besitzen die Blockcopolymere der Haftklebmassen als A-Blöcke Polystyrolendblöcke. Anstelle der bevorzugten Polystyrolblöcke können als Vinylaromaten auch Polymerblöcke auf Basis anderer aromatenhaltiger Homo- und Copolymere (bevorzugt C₈- bis C₁₂-Aromaten) mit Glasübergangstemperaturen von größer 75 °C genutzt werden wie zum Beispiel α-methylstyrolhaltige Aromatenblöcke. Weiterhin können auch gleiche oder unterschiedliche A-Blöcke enthalten sein. Glasübergangstemperaturen werden nach Test L bestimmt.

A-Blöcke werden im Zusammenhang dieser Erfindung auch als "Hartblöcke" bezeichnet. B-Blöcke werden entsprechend auch "Weichblöcke" oder "Elastomerblöcke" genannt. Dies spiegelt die erfindungsgemäße Auswahl der Blöcke entsprechend ihrer Glasübergangstemperaturen (für A-Blöcke mindestens 40 °C, insbesondere mindestens 60 °C und für B-Blöcke bis zu -50 °C insbesondere höchstens -80 °C) wider. Diese Angaben beziehen sich auf die reinen, unabgemischten Blockcopolymere.

In einer vorteilhaften Ausführungsform weisen die Polybutadien-Blockcopolymere einen Polyvinylaromatenanteil von 20 Gew.-% bis 40 Gew.-% auf, bevorzugt zwischen 25 Gew.-% und 35 Gew.-%. Ein zu geringer Polyvinylaromatenanteil führt zu unzureichender physikalischer Vernetzung, die in den Polybutadien-Blockcopolymeren durch Mikrophasenseparation geschaffen wird. Die physikalische Vernetzung ist für die Halteleistung und die Reißfestigkeit wichtig. Bei einem zu hohen Polyvinylaromatenanteil dagegen verliert die Klebemasse an Klebrigkeit.

Die aus den A- und B-Blöcken resultierenden Polybutadien-Blockcopolymere können gleiche oder unterschiedliche B-Blöcke enthalten und zwar im Hinblick auf Mikrostruktur (relatives Verhältnis der für Polybutadien möglichen Monomerverknüpfungsarten 1,4-cis, 1,4-trans, 1,2-vinyl: bevorzugt ist ein 1,4-Anteil (cis + trans) von > 75 %, sehr bevorzugt von > 90 % bezogen auf die Polybutadienblöcke und ein 1,4-cis-Anteil von > 40 % bezogen auf die Polybutadienblöcke) und/oder Kettenlänge. Ein hoher Anteil an 1,4-Verknüpfung und insbesondere 1,4-cis-Verknüpfung der Monomereinheiten in den Polybutadienen-Blöcken führt zu vorteilhafter Zug/Dehnungs-Charakteristik, so dass eine ausreichende Dehnbarkeit resultiert, die für das unter Verstreckung rückstandsfreie Wiederablösen wichtig ist.

In einer weiteren bevorzugten Ausgestaltung beträgt der Anteil der Polybutadien-Blockcopolymere, insbesondere Polystyrol-Polybutadien-Blockcopolymere in Summe bezogen auf die gesamte Haftklebemasse mindestens 40 Gew.-%, bevorzugt mindestens 45 Gew.-%. Ein zu geringer Anteil an Polybutadien-Blockcopolymeren hat zur Folge, dass die Kohäsion der Haftklebemasse relativ niedrig ist und zum Beispiel der Kippschertest nicht mehr bestanden wird.

Der maximale Anteil der Polybutadien-Blockcopolymere, insbesondere Polystyrol-Polybutadien-Blockcopolymere, in Summe bezogen auf die gesamte Haftklebmasse beträgt maximal 60 Gew.-%, bevorzugt maximal 55 Gew.-%. Ein zu hoher Anteil an Polybutadien-Blockcopolymeren kann wiederum zur Folge haben, dass die Haftklebemasse kaum noch haftklebrig ist.

Sehr bevorzugt wird ein Elastomergemisch eingesetzt, das bezogen auf die Gesamtelastomereinsatzmenge mindestens 50 Gew.-%, bevorzugt mindestens 60 Gew.-% A-B-A-Triblockcopolymer enthält und ergänzend 50 Gew.-% beziehungsweise bevorzugt ergänzend 40 Gew.-% A-B-Diblockcopolymer.

Überraschend lassen sich die Anforderungen durch Polybutadien-Blockcopolymer basierende Klebemassen (in geeigneter Kombination mit den weiteren erfindungsgemäß erforderlichen Bestandteilen) nicht nur im Hinblick auf Halte- und Klebeleistung, rückstandsfreie Wiederablösbarkeit und optische Eigenschaften realisieren, sondern auch im Hinblick auf Beständigkeit (oxidativer Alterung), obwohl es sich bei den Polybutadien-Blockcopolymeren um ungesättigte Verbindungen handelt, wenn erfindungsgemäß formuliert wird und insbesondere ein entsprechend vorteilhaftes viskoelastisches Verhalten vorliegt.

Als Klebharzsorte 1 kommt ein Kohlenwasserstoffharz zum Einsatz. Die Auswahl der Klebharzsorte 1 hat Einfluss auf die Tönung der Klebemasseformulierung, ihre Beständigkeit und die Verträglichkeit mit den übrigen Formulierungsbestandteilen insbesondere dem Polybutadien-Blockcopolymer basierenden Elastomer.

Zu der Klebharzsorte 1 zählen nicht- und bevorzugt teilhydrierte Kohlenwasserstoffharze mit einer Erweichungstemperatur (Ring & Ball) von mindestens 90 °C und bevorzugt von höchstens 125 °C. Sehr bevorzugt liegt die Erweichungstemperatur bei mindestens 95 °C und höchstens 115 °C.

Als Beispiele für Vertreter der Klebharzsorte 1 seien hydrierte und nicht hydrierte Polymerisate des Dicyclopentadiens, nicht hydrierte, partiell oder selektiv hydrierte Kohlenwasserstoffharze auf Basis von C₅-, C₅/C₉- oder C₉-Monomerströmen, Polyterpenharze auf Basis von α-Pinen und/oder ß-Pinen und/oder δ-Limonen genannt. Kohlenwasserstoffharze weisen bevorzugt einen Gardener-Wert von < 1 auf. Der Gardener-Wert wird nach ASTM D1544 bestimmt. Dazu werden 50 Gew.-% Harz in 50 Gew.-% Toluol aufgelöst und die Farbe mit Referenzmustern untersucht.

Klebharze der Klebharzsorte 1 mit einer Erweichungstemperatur von höchstens 110 °C weisen einen Hydrierungsgrad zwischen 90 % und 0 % auf (wobei 100 % vollhydriert bedeutet und 0 % nichthydriert), bevorzugt zwischen 90 % und 50 %.
Klebharze der Klebharzsorte 1 mit einer Erweichungstemperatur von größer 110 °C weisen einen Hydrierungsgrad zwischen 70 % und 0 % auf, bevorzugt zwischen 70 % und 50 %.

Die Auswahl des richtigen Hydrierungsgrads ist wichtig im Hinblick auf die Verträglichkeit der Klebharze mit den Elastomeren.

Klebharzsorte 1 kommt, sofern es sich um ein teilhydriertes Klebharz handelt, gemäß einer weiteren bevorzugten Ausführungsform der Erfindung zu einem Anteil von mindestens 25 Gew.-% und höchstens 60 Gew.-%, bevorzugt von mindestens 30 Gew.-% und höchstens 50 Gew.-% (bezogen auf die Klebmassezusammensetzung) zum Einsatz.

Klebharzsorte 1 kommt, sofern es sich um ein nichthydriertes Klebharz handelt, gemäß einer weiteren bevorzugten Ausführungsform der Erfindung zu einem Anteil von mindestens 15 Gew.-% und höchstens 30 Gew.-%, bevorzugt von mindestens 18 Gew.-% und höchstens 28 Gew.-% (bezogen auf die Klebmassezusammensetzung) zum Einsatz.

Klebharzsorte 2 kommt je nach Auswahl von Klebharzsorte 1 zum Einsatz.

Als Klebharzsorte 2 kommt ein Kohlenwasserstoffharz (nicht-, teil- oder vollhydriert), ein Terpenphenolharz oder ein Kolophoniumharz (nicht disproportioniert oder disproportioniert, teil- oder vollhydriert) zum Einsatz. Klebharzsorte 2 beeinflusst im Wesentlichen die Balance zwischen Halteleistung (Kohäsion) und Klebleistung (Adhäsion).

Der Hydrierungsgrad der Klebharze der Klebharzsorte 2 liegt bei mindestens 0 % und höchstens 100 %, bevorzugt höchstens 70 %. Ist das Harz nicht oder nur geringfügig hydriert, dann wird typischerweise so wenig wie möglich eingesetzt, da sonst eine Tönung der Klebmasse resultieren kann.

Harze der Klebharzsorte 2 weisen eine Erweichungstemperatur von mindestens 90 °C und bevorzugt höchstens 115 °C auf.

Klebharze der Klebharzsorte 2 mit einer Erweichungstemperatur von mindestens 90 °C und höchstens 105 °C kommen bis zu einem Anteil von Menge Harzsorte 1 zu Menge Harzsorte 2 von 1:1 zum Einsatz.

Klebharze der Klebharzsorte 2 mit einer Erweichungstemperatur von > 105 °C kommen (bezogen auf die Gesamtklebemasse) zu einem Anteil von höchstens 25 Gew.-%, bevorzugt höchstens 15 Gew.-% zum Einsatz.

Wenn als Klebharzsorte 1 ein Harz mit einer Erweichungstemperatur von höchstens 110 °C eingesetzt wird, dann ist die Klebharzsorte 2 nicht erforderlich, kann jedoch, um die klebtechnischen Eigenschaften wunschgemäß feineinzustellen, gewählt werden.

Zumindest eines der Harze der Harzsorte 1 und Harzsorte 2 ist teilhydriert. Bevorzugt ist der Anteil an teilhydriertem Harz in der Gesamtklebemasse mindestens 25 Gew.-%, sehr bevorzugt mindestens 30 Gew.-%.

Kommt nur ein Klebharz zur Anwendung, dann handelt es sich dabei um eine teilhydrierte Type.

Der Gesamtklebharzgehalt in der Klebemasse liegt bei mindestens 30 Gew.-%, bevorzugt mindestens 40 Gew.-% und höchstens 60 Gew.-%, bevorzugt höchstens 50 Gew.-%.

Das Weichharz dient zur finalen Feineinstellung der Kohäsions-/Adhäsions-Balance. Es handelt sich dabei um ein Weichharz oder Weichharzgemisch mit einer Schmelzviskosität bei 25 °C und 1 Hz von zumindest 25 Pa*s, bevorzugt von zumindest 50 Pa*s und einer Erweichungstemperatur von < 25 °C. Die Schmelzviskosität wird nach Test K bestimmt. Bei dem Weichharz kann es sich sehr bevorzugt um ein Kohlenwasserstoff basierendes oder ein Kolophonium basierendes Weichharz handeln. Das Weichharz oder das Weichharzgemisch kommt in Bezug auf die Gesamtklebmasseformulierung mit einem Anteil von 0 Gew.-% und höchstens 6 Gew.-% bezogen auf die Gesamtklebemassezusammensetzung zum Einsatz.

Der Klebemasse können als weitere Additive vor allem Schutzmittel zugesetzt werden. Hier seien Alterungsschutzmittel primärer und sekundärer Art, Licht- und UV-Schutzmittel sowie Flammschutzmittel genannt und auch Füllstoffe, sofern die optischen Eigenschaften entsprechend der genannten Anforderungen erfüllt bleiben.
Typische Einsatzmengen für ein Additiv liegen bei bis zu 1 Gew.-% bezogen auf die Gesamtklebemassezusammensetzung. Besonders vorteilhaft sind Alterungsschutzmittel, die keine farbigen Rückstände auf Verklebungsuntergründen zurücklassen (siehe hierzu den Stand der Technik der EP 1 341 862 B1). Füllstoffe können höher dosiert werden, und zwar typischerweise zu einem Anteil von bis 5 Gew.-% bezogen auf die Gesamtklebemassezusammensetzung.
Als Additive können typischerweise genutzt werden:
- Plastifizierungsmittel wie zum Beispiel Weichmacheröle, oder niedermolekulare flüssige Polymere, wie zum Beispiel niedermolekulare Polybutene
- primäre Antioxidantien wie zum Beispiel sterisch gehinderte Phenole
- sekundäre Antioxidantien, wie zum Beispiel Phosphite oder Thioether
- Prozessstabilisatoren wie zum Beispiel C-Radikalfänger
- Flammschutzmittel
- Lichtschutzmittel wie zum Beispiel UV-Absorber oder sterisch gehinderte Amine
- Farbstoffe
- Verarbeitungshilfsmittel
- (Nano)Füllstoffe wie zum Beispiel Siliziumdioxid, Aluminiumoxid, Titandioxid oder Schichtsilikate, ebenso Farbpigmente und Farbstoffe (für transparente aber gezielt gefärbte Ausgestaltungen) sowie optische Aufheller
- Endblockverstärkerharze sowie
- gegebenenfalls weitere Polymere von bevorzugt elastomerer Natur; entsprechend nutzbare Elastomere beinhalten unter anderem solche auf Basis reiner Kohlenwasserstoffe, zum Beispiel Polybutadien, chemisch im wesentlichen gesättigte Elastomere wie zum Beispiel gesättigte Ethylen-Propylen-Copolymere, α-Olefincopolymere, Polyisobutylen, Butylkautschuk, Ethylen-Propylenkautschuk, sowie chemisch funktionalisierte Kohlenwasserstoffe wie zum Beispiel halogenhaltige, acrylathaltige, allyl- oder vinyletherhaltige Polyolefine.

Es sei betont, dass die erfindungsgemäße Klebemasse antiozonantienfrei ist.

Besonders vorteilhafte Ausführungsformen der erfindungsgemäß eingesetzten Haftklebemasse seien explizit erwähnt:
A) Haftklebemasse enthaltend, vorzugsweise bestehend aus
   a) einem Elastomer, wobei das Elastomer einen Anteil von 40 Gew.-% bis 60 Gew.-% bezogen auf die Klebemassenzusammensetzung aufweist und wobei als Elastomer nur Polybutadien-Blockcopolymere eingesetzt sind,
   b) einem teilhydrierten Kohlenwasserstoffharz (Harzsorte 1) mit einer Erweichungstemperatur von mindestens 90 °C, wobei das Klebharz einen Anteil von 40 Gew.-% bis 60 Gew.-% bezogen auf die Klebemassenzusammensetzung aufweist.
B) Haftklebemasse enthaltend, vorzugsweise bestehend aus
   (a) einem Elastomer, wobei das Elastomer einen Anteil von 40 Gew.-% bis 60 Gew.-% bezogen auf die Klebemassenzusammensetzung aufweist und wobei als Elastomer nur Polybutadien-Blockcopolymere eingesetzt sind,
   b) einem nicht hydrierten Kohlenwasserstoffharz (Harzsorte 1) mit einer Erweichungstemperatur von mindestens 90 °C, wobei die Harzsorte 1 einen Anteil von 15 Gew.-% bis 30 Gew.-% bezogen auf die Klebemassenzusammensetzung aufweist.
   c) einem weiteren Klebharz der Harzsorte 2 mit einer Erweichungstemperatur von mindestens 90 °C, wobei die Harzsorte 2 einen Anteil von 15 Gew.-% bis 30 Gew.-% bezogen auf die Klebemassenzusammensetzung aufweist.
C) Haftklebemasse enthaltend, vorzugsweise bestehend aus
   (a) einem Elastomer, wobei das Elastomer einen Anteil von 40 Gew.-% bis 60 Gew.-% bezogen auf die Klebemassenzusammensetzung aufweist und wobei als Elastomer nur Polybutadien-Blockcopolymere eingesetzt sind,
   b) einem teilhydrierten Kohlenwasserstoffharz (Harzsorte 1) mit einer Erweichungstemperatur von mindestens 90 °C, wobei die Harzsorte 1 einen Anteil von 30 Gew.-% bis 59 Gew.-% bezogen auf die Klebemassenzusammensetzung aufweist.
   c) einem weiteren Klebharz der Harzsorte 2 mit einer Erweichungstemperatur von mindestens 90 °C, wobei die Harzsorte 2 einen Anteil von 1 Gew.-% bis 30 Gew.-% bezogen auf die Klebemassenzusammensetzung aufweist.

Erfindungsgemäße Formulierungen weisen das folgende Eigenschaftsprofil auf:

| *Eigenschaft* | *Physikalische Messgröße* | *Einheit* | *Wert(ebereich)* | *Messmethode* |
|---|---|---|---|---|
| Kohäsion | Kippscherstandzeit | Tage (d) | > 10 Tage, bevorzugt > 18 Tage | Test A |
| Adhäsion | Schälgeschwindigkeit | mm/24h | < 30 mm/24h, bevorzugt < 20 mm/24 h | Test B |
| Ablöseverhalten | Stripkraft | N/cm | < 20 N/cm bevorzugt < 15 N/cm | Test C |
| UV-Beständigkeit | Reißeranfälligkeit nach UV-Lagerung | %-Reißer | ≤ 10 %, bevorzugt < 3 %, sehr bevorzugt 0 % | Test D |
| Farbe | Farbwert b* | | > 0, < 5 (bevorzugt < 3) | Test E |
| Transparenz | Haze | % | < 6,0 % (bevorzugt < 4,0, sehr bevorzugt < 2,5 %) | Test F |
| Transparenz | Gesamttransmission | % | >85 %, bevorzugt >90% | Test F |
| Ozonbeständigkeit | Optische Bewertung | | Keine Rissbildung erkennbar | Test I |

Teil der Erfindung ist zudem ein durch dehnendes Verstrecken ablösbarer transparenter Klebestreifen, der aus dieser Haftklebemasse trägerfrei aufgebaut ist. Die Herstellung erfolgt bevorzugt lösungsmittelfrei. Lösungsmittelhaltige Prozesse sind jedoch auch denkbar.

Typische Produktaufbauten sind Klebebänder (Transferklebebänder), Klebefolien und Stanzlinge (Klebestrips). Schichtdicken liegen bei mindestens 25 µm, bevorzugt bei mindestens 100 µm und bei bis zu 2 mm. Sehr bevorzugt sind Schichtdicken zwischen etwa 500 µm und etwa 800 µm. Vielfältige Anwendungsmöglichkeiten sind auch für Klebebänder zwischen etwa 150 µm und etwa 400 µm denkbar.

Klebefolien können in beiden Dimensionen beliebige Ausmaße annehmen. Klebebänder sind zum Beispiel 2 mm, 5 mm, 10 mm, 20 mm oder 50 mm breit. Klebebänder können zu Rollen gewickelt vorliegen.
Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Stanzlinge weisen typischerweise eine Länge von mindestens 5 mm auf. Längen können auch bei 10 mm, 20 mm, 50 mm, 100 mm oder darüber liegen.
Breiten liegen typischerweise bei mindestens 2 mm. Breiten können auch bei 5 mm, 10 mm, 20 mm, 50 mm oder darüber liegen.

Die Stanzlinge sind üblicherweise länger als breit, wobei die Verstreckung zum Wiederablösen dann vorteilhaft entlang der Längsachse liegt. Alle Winkel der Stanzlinge können 90° betragen oder davon abweichen. Es sind auch Formen möglich, bei denen sich der Stanzling in zumindest eine Richtung verjüngt und insbesondere zu einer Spitze zuläuft. Kanten können auch rund gestaltet sein.

Klebeprodukte, insbesondere Stanzlinge können Anfasserbereiche, die zur Ober- und/oder Unterseite des Stanzlings nicht klebrig sind, enthalten.
Dieser Bereich dient als Anfasser, an dem gezogen wird, um das dehnende Verstrecken insbesondere in der Verklebungsebene zu erzielen, und ist daher bevorzugt auf beiden Seiten nicht haftklebrig ausgerüstet, insbesondere durch das Aufbringen von Folien- oder Papierstücken.
In einer anderen vorteilhaften Weiterbildung kann der Bereich durch Bestrahlung, Bepuderung oder Neutralisation der Klebemasse erzeugt werden. Alternativ kann ein Lack oder ein Primer an den entsprechenden Stellen aufgetragen werden.
Zudem kann die Oberfläche durch chemische Behandlung wie Ätzen verändert werden, um jeweils nichtklebende Zonen zu erzeugen.

Klebeprodukte werden insbesondere auf einem Trennliner (bevorzugt silikonisiertes Papier oder Folie) bereitgestellt. Der Liner kann einseitig trennend ausgestattet sein. Dann kommt vorteilhaft eine zweite Lage eines Liners zur Abdeckung der zweiten Oberfläche zum Einsatz (vor allem bei Stanzlingen). Der Liner kann auch beidseitig trennend ausgestattet sein. Dann kann mit einer Linerlage gearbeitet werden (vor allem bei Klebebändern).

Der Kern der Erfindung liegt eindeutig bei der Verwendung der erfindungsgemäßen Haftklebemassen in einschichtigen, sich durch dehnendes Verstrecken im Wesentlichen in der Verklebungsebene rückstands- und zerstörungsfrei wiederablösbaren Haftklebestreifen.

Einseitig haftklebrige Haftklebestreifen können zum Beispiel durch einseitige Inertisierung des Haftklebestreifens erhalten sein.

Die bereits erwähnten Einsatzgebiete lassen sich auch vorteilhaft mit den erfindungsgemäßen Klebestreifen verwirklichen.

Aufgrund der geschilderten Eigenschaften kann der erfindungsgemäße Klebestreifen hervorragend zur Verklebung eines Gegenstands auf einer hydrophilen Oberfläche verwendet werden.

Mögliche weitere Anwendungen entsprechender Selbstklebebänder finden sich in der DE 42 33 872 A1, DE 195 11 288 A1, US 5,507,464 A, US 5,672,402 A und WO 94/21157 A1, spezielle Ausführungsformen sind zum Beispiel in der DE 44 28 587 A1, DE 44 31 914 A1, WO 97/07172 A1, DE 196 27 400 A1, WO 98/03601 A1 und DE 196 49 636 A1, DE 197 20 526 A1, DE 197 23 177 A1, DE 297 23 198 A1, DE 197 26 375 A1, DE 197 56 084 A1, DE 197 56 816 A1, DE 198 42 864 A1, DE 198 42 865 A1, WO 99/31193 A1, WO 99/37729 A1 und WO 99/63018 A1.

Vorteilhaft lässt sich der erfindungsgemäße Klebestreifen in einem Verbund einsetzen, wobei der Klebestreifen zwischen zwei Substraten verklebt ist, von denen zumindest eines transparent ist und/oder ein Substrat so ausgebildet ist, dass eine Last daran befestigt werden kann.
Das oder die transparenten Substrate können dabei aus Glas oder Kunststoffen wie Polycarbonaten, Poly(meth)acrylaten oder Polystyrolen bestehen.
Das zur Aufnahme einer Last geeignete Substrat kann ein Hakenkörper sein. Vorzugsweise ist dieser gleichzeitig transparent.
Dabei wird die aufgrund der Last vom Substrat ausgehende Kippscherbelastung auf den Klebestreifen übertragen.

Anhand der nachfolgend beschriebenen Figuren sowie Beispielen werden besonders vorteilhafte Ausführungen der Erfindung näher erläutert, ohne damit die Erfindung unnötig einschränken zu wollen.

Es zeigen
- Figur 1: den erfindungsgemäßen haftklebrigen Klebestreifen, bei dem die Kernschicht aus einer Klebemasse besteht, und
- Figur 2: den haftklebrigen Klebestreifen, bei dem die Kernschicht aus einem Träger besteht (nicht erfindungsgemäß).
- Figur 3: wie ein Gegenstand mit einem Klebestreifen gemäß Figur 1 auf einem Untergrund verklebt ist,
- Figur 4: das Verfahren zur Ablösung des mit dem Haftklebestreifen verklebten Gegenstands, dynamisch mechanische Profile erfindungsgemäßer Klebemassen
- Figur 5: und zum Vergleich herangezogener Materialien/Formulierungen und
- Figur 6: die schematische Darstellung zur Auswertung einer Glasübergangstemperatur nach Test L.

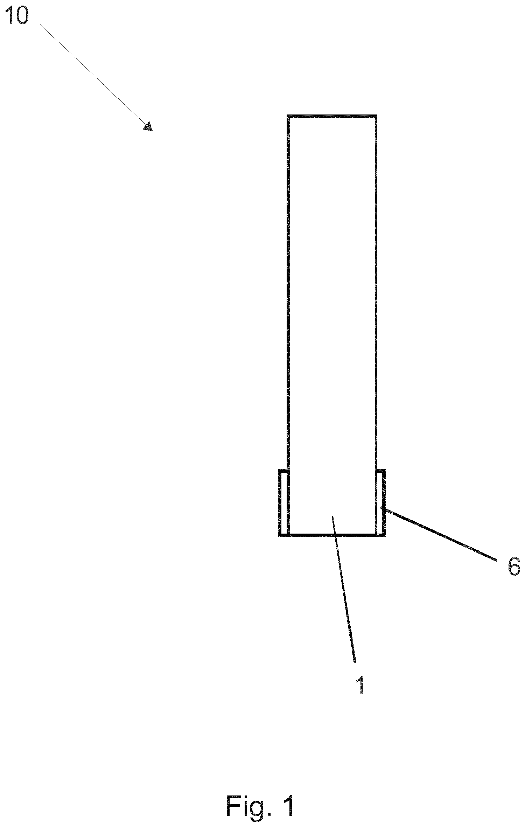

In der Figur 1 ist der erfindungsgemäße haftklebrige Klebestreifen 10 gezeigt, bei dem die Kernschicht 1 aus der erfindungsgemäßen Klebemasse besteht, welche sich durch dehnendes Verstrecken insbesondere in der Verklebungsebene wiederablösen lässt.

Die Kernschicht 1 weist einen Bereich auf, der als Anfasser dient, an dem gezogen wird, um das dehnende Verstrecken insbesondere in der Verklebungsebene der Kernschicht 1 zu erzielen. Dieser Bereich ist auf beiden Seiten durch das Aufbringen von bevorzugt silikonisierten Folien- oder Papierstücken 6 nicht haftklebrig ausgerüstet.

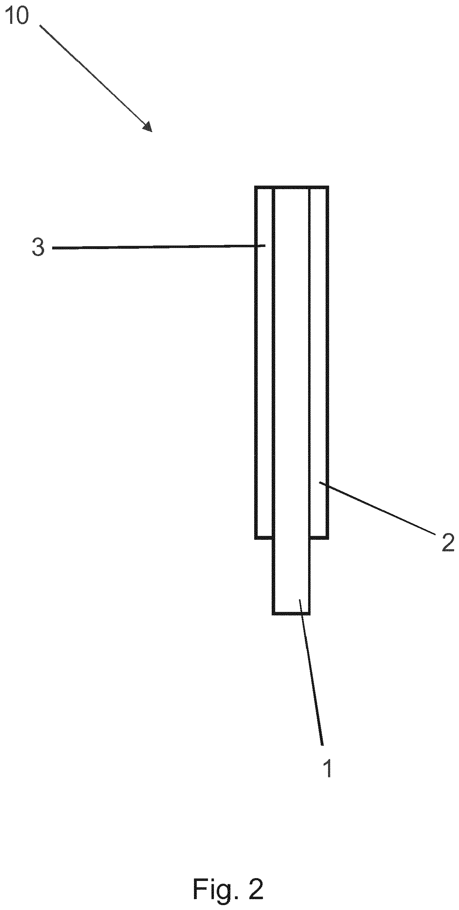

In der Figur 2 ist der nicht erfindungsgemäße haftklebrige Klebestreifen 10 gezeigt, bei dem die Kernschicht 1 aus einem Träger besteht, welcher sich durch dehnendes Verstrecken insbesondere in der Verklebungsebene wiederablösen lässt.

Auf den Träger 1 sind zwei erfindungsgemäße Klebeschichten 2, 3 aufgebracht, die vorzugsweise die gleiche Zusammensetzung aufweisen.

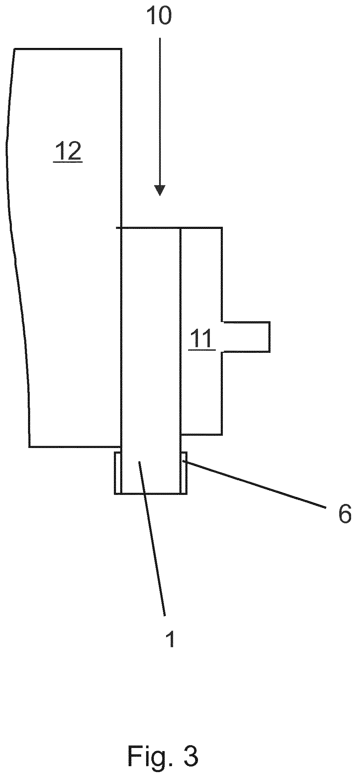

In der Figur 3 ist gezeigt, wie ein Gegenstand 11 mit einem Klebestreifen 10 gemäß Figur 1 auf einem zum Beispiel hydrophilen Untergrund 12 verklebt ist. Bei dem Gegenstand 11 handelt es sich um einen Haken. 11 und/oder 12 können transparent ausgestaltet sein.

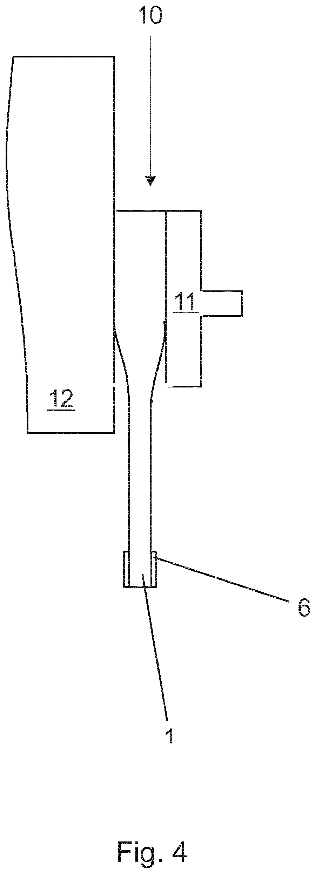

Die Figur 4 zeigt das Verfahren zur Ablösung des mit dem Haftklebestreifen 10 verklebten Gegenstands 11.
Es wird am Anfasser des Klebestreifens 10 in Richtung der Verklebungsebene gezogen, was zu einer Dehnung führt. Aufgrund der Dehnung verliert die Kernschicht an Klebkraft, löst sich von dem Untergrund 12.
Die Dehnung der Kernschicht 1 wird solange fortgesetzt, bis eine vollständige Trennung der Kernschicht 1 vom Untergrund 12 erfolgt ist.

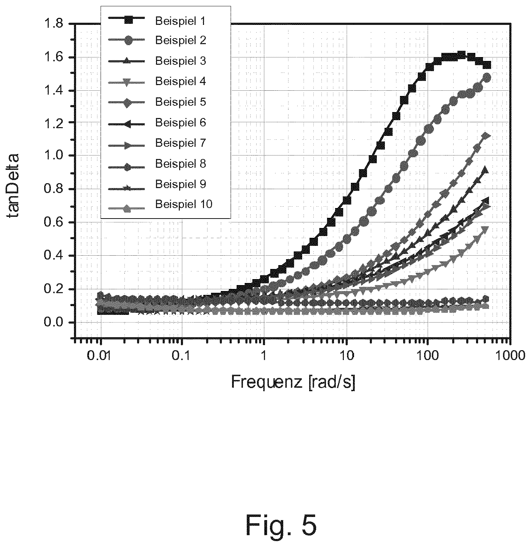

Figur 5 stellt die Messkurven für die Beispiele 1 bis 10 dar, erhalten nach Prüfmethode J. Aus den Daten können die vorteilhaften tan δ-Bereiche abgelesen werden.

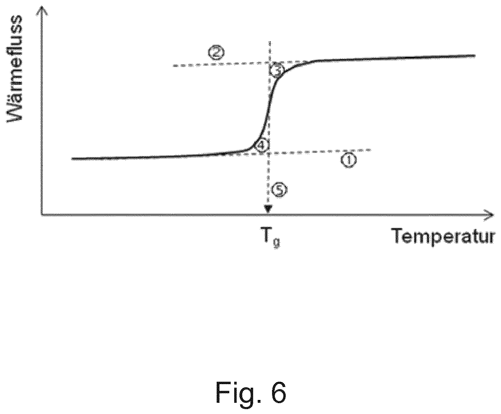

Figur 6 zeigt schematisch des Vorgehen zur Ermittlung der Glasübergangstemperatur aus einem Thermogramm, das nach Test L aufgenommen wurde.

### Prüfmethoden

### Test A - Kippscherstandzeit

Zur Bestimmung der Kippscherfestigkeit wird die zu prüfende Klebstofffolie der Abmessung 20 mm x 50 mm, welche an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm, mittig auf eine Polystyrolbasisplatte der Abmessung 40 mm x 20 mm x 3 mm (Länge x Breite x Dicke) verklebt. Auf die Basisplatte wird ein 10 cm langer Stahlstift aufgesteckt, welcher vertikal auf der Plattenfläche sitzt. Die erhaltenen Probekörper werden mit einer Kraft von 100 N auf eine Glasplatte verklebt (Andruckzeit = 5 sec) und 5 min im unbelasteten Zustand belassen. Nach Beaufschlagung der gewählten Kippscherbelastung durch Anhängen eines Gewichtes (20 N bei 50 mm Hebelarm) wird die Zeit bis zum Versagen der Verklebung (= Kippscherstandzeit) ermittelt. Das Testklima ist dabei 23 °C bei einer relativen Luftfeuchtigkeit von 50%. Für viele Anwendungen gilt je höher die Kippscherstandzeit, desto besser.

### Test B - Schälgeschwindigkeit:

Zur Ermittlung der Schälfestigkeit werden die zu untersuchenden Haftklebestreifenmuster der Abmessung 20 mm x 50 mm vollflächig mit einer 23 µm starken PET-Folie luftblasenfrei einkaschiert, danach die zweite Klebfolienstreifenseite an einem Ende mit einem ca. 10 mm langen Folienstreifen abgedeckt, so dass an diesem Ende ein beidseitig nicht haftklebriger Anfasserbereich entsteht. Hiernach wird der zu prüfende Klebfolienstreifen vorderseitig, mit leichtem Fingerandruck auf den Prüfuntergrund (gestrichene Raufasertapete: Tapete = Erfurt Körnung 52, Farbe = Alpina Weiß, Tapete verklebt auf Pressspanplatte) aufgeklebt. Die Muster werden anschließend 10 s lang bei einem Anpressdruck von 100 N pro 10 cm² Haftklebefläche angedrückt, danach 15 Minuten bei 40 °C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme (20 g) ein Gewicht von 50g befestigt, so dass die entstehende Schälbelastung (ca. 0.7 N pro 20 mm Klebestreifenbreite) orthogonal zur Verklebungsebene wirkt. Nach 15 Minuten und nach weiteren 24 h wird diejenige Strecke markiert, die der Klebestreifen vom Verklebungsuntergrund seit Versuchsbeginn abgeschält ist. Der Abstand zwischen beiden Markierungen wird als Schälweg (Einheit: mm pro 24 h) angegeben. Für viele Anwendungen gilt je niedriger der Schälweg desto besser.

### Test C - Stripkraft:

Zur Ermittlung der Ablösekraft (Stripkraft) wird eine Klebstofffolie der Abmessungen 50 mm * 20 mm (Länge * Breite), mit am oberen Ende nicht haftklebrigem Anfasserbereich, zwischen zwei Stahlplatten (deckungsgleich zueinander angeordnet) der Abmessungen 50 mm x 30 mm mittig verklebt. Die so erhaltenen Probekörper werden mit einer Kraft von 500 N für 5 sec angedrückt und nachfolgend 5 min im unbelasteten Zustand belassen. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40 °C gelagert. Nach Rekonditionierung auf RT wird der Klebfolienstreifen mit einer Zuggeschwindigkeit von 1000 mm/min parallel zur Verklebungsebene und kontaktfrei zu den Kantenbereichen der beiden Stahlplatten, herausgelöst. Dabei wird die erforderliche Ablösekraft in N gemessen. Angegeben wird das Maximum der Stripspannungswerte in N/cm.

### Test D - UV-Beständigkeit

Um die UV-Beständigkeit zu testen, werden jeweils 10 Klebestreifen der zu prüfenden Klebstofffolie in der Abmessungen 20 mm x 50 mm, welche an einem Ende beidseitig mit einem nicht haftklebrigen Anfasserbereich versehen sind (erhalten durch Aufkaschieren von 25 µm starker biaxial verstreckter Polyesterfolie der Abmessungen 20 mm x 13 mm, zwischen zwei Glasplatten verklebt. Die Verklebung erfolgt so, dass der Anfasser 10 mm aus der Klebefuge hinausragt. Vor dem Aufbringen der zweiten Glasplatte wird jeder Klebestreifen mit einer Kraft von 100 N angedrückt. Die Klebestreifen werden dann für 7 Tage mit einer Sonnenlichtlampe (Typ Osram Ultra Vitalux 300 W) durch die Glasplatte in einem Abstand von 80 cm bestrahlt. Die Testtemperatur beträgt 25 °C. Nach den 7 Tagen Lagerung werden die Klebestreifen durch Ziehen gelöst, wobei in einem Winkel von 15° gezogen wird. Notiert wird die Anzahl der abgerissenen Klebestreifen. Die Angabe erfolgt in % gerissener Klebestreifen.

### Test E - Farbwert b*:

Es wird gemäß DIN 6174 vorgegangen, und die Farbcharakteristik im dreidimensionalen Raum, aufgespannt durch die drei Farbparameter L*, a* und b*, nach CIELab untersucht. Dazu wird ein BYK Gardener spectro-guide Messgerät verwendet, ausgestattet mit einer D/65° Lampe. Innerhalb des CIELab-Systems gibt L* den Grauwert, a* die Farbachse von grün nach rot und b* die Farbachse von blau nach gelb an. Der positive Wertebereich für b* gibt die Intensität des gelben Farbanteil an. Als Referenz diente eine weiße Keramikfliese mit einem b* von 1,68. Diese Fliese dient zudem als Probenhalter, auf den die zu prüfende Klebschicht auflaminiert wird. Die Farbmessung erfolgt an der jeweiligen reinen Klebschicht in 650 µm Schichtdicke, nachdem diese von den Trennlinern befreit worden ist.

### Test F - Haze (Großwinkelstreuung), Transmission:

Mit der Transparenz beziehungsweise dem Transmissionsgrad - bisweilen auch nur kurz als Transmission bezeichnet -, der in der Regel in % angegeben wird, ist das Verhältnis der auf der Rückseite eines mit Licht durchstrahlten Körpers ankommenden Lichtleistung zu der auf der Vorderseite eintreffenden Lichtleistung gemeint. Die Transmission wird beschnitten durch Reflektion und ggf. Absorption.
Es gilt also: Transmissionsgrad = (1 - Reflektionsgrad - Absorptionsgrad).

Die Bestimmung von Transmission und Haze erfolgt nach ASTM D1003 an einem hazegard plus der Firma Byk-Gardner. Hierzu wurde gemäß ASTM D1003 vorgegangen.
Zur Messung von Großwinkelstreuung und Transmission wird der Klebestreifen zunächst blasenfrei auf einen mit Isopropanol vorgereinigten Glasobjektträger für die Mikroskopie (VWR, ECN 631-1552, #201107) aufgeklebt. Nachfolgend wird eine 50 µm dicke PET-Folie (Melinex® 401, DuPont Teijin Films) mit einem Handroller zukaschiert, wobei strikt auf Blasen- und Staubfreiheit geachtet wird. Das so erhaltene Laminat wird für 3 Tage bei 60 °C gelagert und dann vermessen.

### Test G - Molekulargewichtsbestimmung:

Das gewichtsmittlere Molekulargewicht M_{w} wurde mittels Gelpermeationschromatographie (GPC) bestimmt. Als Eluent wurde THF eingesetzt. Die Messung erfolgte bei 23 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁴ und 10⁶ mit jeweils ID 8,0 mm x 300 mm eingesetzt. Die Probenkonzentration betrug 4 g/l, die Durchflussmenge 1,0 ml pro Minute. Es wurde gegen PS Standards gemessen. (µ = µm; 1 Å = 10⁻¹⁰ m).

### Test H - Klebharzerweichungstemperatur:

Die Klebharzerweichungstemperatur wird nach der einschlägigen Methodik durchgeführt, die als Ring & Ball bekannt ist und nach ASTM E28 standardisiert ist.

### Test I - Ozon-Beständigkeit:

Auf einer Steingutfliese (V&B Fliesen GmbH, Rotensteiner Weg, 66663 Merzig, Artikelnr. 1106TW02) wird mit einem geeigneten Stift durch zwei parallele Linien ein Abstand von 6 cm markiert. Nachfolgend wird auf einer Klebstofffolie der Abmessungen 50 mm * 20 mm (Länge * Breite) in Längsrichtung eine Strecke von 3 cm Länge angezeichnet. Die Klebefolie wird nun exakt auf die doppelte Länge verdehnt und im gedehnten Zustand auf der Steingutfliese so fixiert, dass sich die Markierungen auf Klebefolie und Fliese überlappen. Der Klebefilm wird mit Trennfolie abgedeckt und mit einem 2-kg-Anrollgewicht auf der Fliese angedrückt, damit die Spannung der Klebefolie erhalten bleibt. Das Muster wird wieder ausgedeckt und anschließend offen für 72h bei 25°C und einer Ozonkonzentration von 50pphm in einem Ozonprüfschrank (Klimaschrank Typ WK3-180/0 der Firma Weiss Umwelttechnik GmbH mit Ozonprüfanlage SIM 6000 der Firma Anseros Klaus Nonnenmacher GmbH) eingelagert. Nach Ablauf der Lagerzeit werden die Muster unter dem Auflichtmikroskop (Vergrößerungsfaktor 6,5) bewertet. Grenzmuster sind in der nachfolgenden Abbildung dargestellt.

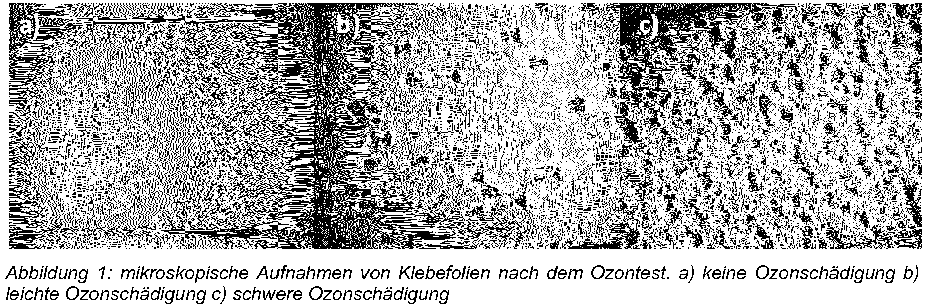

Die Muster gelten als ozonbeständig, wenn keine Schädigung (Risse, Löcher, Trübungen) des Musters erkennbar ist. Ein solches Erscheinungsbild ist unter Abbildung 1a dargestellt.

### Test J - DMA:

Die Angaben der dynamischen Glasübergangstemperaturen beziehen sich auf die Bestimmung mittels dynamisch mechanischer Analyse (DMA) bei geringen Frequenzen (Frequenzsweep; Messbereich: 0,01 bis 512 rad/s; Temperatur: 25 °C; Deformation 1 %; Rheometric ARES Klasse; parallele Platten-Anordnung, Probendicke 1 mm: Probendurchmesser 25 mm: Messkopf: 2000 g Federgelagert mit Normalkraft (2k Bendix))

### Test K - Schmelzviskosität:

Zur Bestimmung der Schmelzviskosität der Weichharze wurde ein Schubspannungssweep in einem schubspannungsgeregelten DSR 200 N Rheometer der Firma Rheometrics Scientific in Rotation durchgeführt. Es kam ein Kegel/Platte-Messsystem mit einem Durchmesser von 25 mm (Kegelwinkel 0,1002 rad) zur Anwendung, der Messkopf war luftgelagert und geeignet für Normalkraftmessungen. Der Spalt betrug 0,053 mm und die Messtemperatur 25 °C. Die Frequenz wurde von 0,002 Hz bis 200 Hz variiert und die Schmelzviskosität bei 1 Hz registriert.

### Test L - DSC:

Die Glasübergangstemperatur von Polymerblöcken in Blockcopolymeren wurde mittels dynamischer Scanning Kalorimetrie (DSC) bestimmt. Dazu wurden ca. 5 mg der unbehandelten Blockcopolymerproben in ein Aluminiumtiegelchen (Volumen 25 µL) eingewogen und mit einem gelochten Deckel verschlossen. Zur Messung wurde ein DSC 204 F1 der Firma Netzsch verwendet und unter Stickstoff zur Inertisierung gearbeitet. Die Probe wurde zunächst auf-150 °C abgekühlt, mit einer Heizrate von 10 K/min bis +150 °C aufgeheizt und erneut auf -150 °C abgekühlt. Die sich anschließende zweite Heizkurve wurde erneut bei 10 K/min gefahren und die Änderung der Wärmekapazität aufgenommen. Glasübergänge werden als Stufen im Thermogramm erkannt. Die Glasübergangstemperatur wird folgendermaßen ausgewertet (siehe dazu Figur 6). An die Basislinie des Thermogramms vor ① und nach ② der Stufe wird jeweils eine Tangente angelegt. Im Bereich der Stufe wird eine Ausgleichsgerade ⑤ parallel zur Ordinate so gelegt, dass sie die beiden Tangenten schneidet und zwar so, dass zwei Flächen ③ und ④ (zwischen der jeweils einen Tangente, der Ausgleichsgeraden und der Messkurve) gleichen Inhalts entstehen. Der Schnittpunkt der so positionierten Ausgleichsgeraden mit der Messkurve gibt die Glasübergangstemperatur

### Figur 6

### Beispiele

Im Folgenden wird die Erfindung durch einige Beispiele näher erläutert.

### Musterpräparation

Alle Knetmassen wurden in einem beheizbaren Doppelsigmakneter der Firma Aachener Maschinenbau Küpper Typ III-P1 hergestellt. Der Mantel des Kneters wurde durch ein Thermalölheizbad der Firma Lauda erwärmt. Hierbei wurde eine Badtemperatur von 190 °C eingestellt. Während des gesamten Knetvorgangs lag eine CO₂-Schutzgasatmosphäre an. Der Kneter wurde bei 50 U/min betrieben.

Zunächst wurden die Elastomere zusammen mit den festen Alterungsschutzmitteln Irganox 3052 und Irgafos 168 (falls in der jeweiligen Rezeptur enthalten) eingewogen und im Kneter vorgelegt. Danach wurden etwa 10% der Menge an Festharz zugegeben und für 15 Minuten geknetet. Nachfolgend wurde im Abstand von jeweils 10 Minuten jeweils ein Drittel der verbleibenden Menge an Klebharz 1, Klebharz 2 (falls in der jeweiligen Rezeptur enthalten), Weichharz und der flüssigen Alterungs- bzw. Lichtschutzmittel (Weston 399 beziehungsweise Tinuvin-Typen) zugegeben und eingearbeitet.

Nach Abschluss des Knetvorgangs wurden die Knetmassen dem Kneter entnommen und auf Raumtemperatur erkalten lassen.

Die erkalteten Massen wurden zwischen zwei Lagen silikonisiertem Trennpapier positioniert und mit einer Heißpresse der Firma Lauffer GmbH & CO KG Typ RLKV 25 bei 130 °C zu Handmustern mit einer Schichtdicke von 650 µm verpresst.

**Beispiel 1 - Vergleich:**

| | | | Gew.-% |
|---|---|---|---|
| Elastomer | Kraton D1165 PT | Polystyrol-Polyisopren-Blockcopolymer | 24,00 % |
| Klebharz 1 | Dercolyte A115 | nichthydriertes Kohlenwasserstoffharz | 47,00 % |
| Klebharz 2 | -/- | | |
| Weichharz | Wingtack 10 | aliphatisches Kohlenwasserstoffharz | 3,50 % |
| Weitere Bestandteile | Kraton D1102 CS | Polystyrol-Polybutadien-Blockcopolymer | 24,00 % |
| | Tinuvin 571 | | 0,50 % |
| | Irganfos 168 | | 0,50 % |
| | Irganox 3052 | | 0,50 % |

**Beispiel 2 - Vergleich:**

| | | | Gew.-% |
|---|---|---|---|
| Elastomer | Kraton D1102 CS | Polystyrol-Polybutadien-Blockcopolymer | 39,00 % |
| Klebharz 1 | Dercolyte A115 | nichthydriertes Kohlenwasserstoffharz | 45,00 % |
| Klebharz 2 | -/- | | |
| Weichharz | Wingtack 10 | aliphatisches Kohlenwasserstoffharz | 4,50 % |
| Weitere Bestandteile | Kraton D1118 CS | Polystyrol-Polybutadien-Blockcopolymer | 10,00 % |
| | Tinuvin 571 | UV-Schutzmittel | 0,50 % |
| | Weston 399 | Antioxidationsmittel | 0,50 % |
| | Irganox 3052 | Antioxidationsmittel | 0,50 % |

**Beispiel 3 - Vergleich:**

| | | | Gew.-% |
|---|---|---|---|
| Elastomer | Kraton D1102 CS | Polystyrol-Polybutadien-Blockcopolymer | 38,00 % |
| Klebharz 1 | Sukorez SU110 | vollhydriertes Kohlenwasserstoffharz | 23,50 % |
| Klebharz 2 | Sukorez SU100 | vollhydriertes Kohlenwasserstoffharz | 23,50 % |
| Weichharz | Wingtack 10 | aliphatisches Kohlenwasserstoffharz | 3,50 % |
| Weitere Bestandteile | Kraton D 1118 CS | Polystyrol-Polybutadien-Blockcopolymer | 10,00 % |
| | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 4 - Vergleich:**

| | | | Gew.-% |
|---|---|---|---|
| Elastomer | Kraton D1102 CS | Polystyrol-Polybutadien-Blockcopolymer | 39,00 % |
| Klebharz 1 | Regalite R1100 | vollhydriertes Kohlenwasserstoffharz | 30,00 % |
| Klebharz 2 | Foral AX | vollhydriertes Kolophoniumharz | 16,00 % |
| Weichharz | Wingtack 10 | aliphatisches Kohlenwasserstoffharz | 3,50 % |
| Weitere Bestandteile | Kraton D1118 CS | Polystyrol-Polybutadien-Blockcopolymer | 10,00 % |
| | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 5 - erfindungsgemäß:**

| | | | Gew.-% |
|---|---|---|---|
| Elastomer | Kraton D1102 CS | Polystyrol-Polybutadien-Blockcopolymer | 38,00 % |
| Klebharz 1 | Regalite R7100 | teilhydriertes Kohlenwasserstoffharz | 32,00 % |
| Klebharz 2 | Piccolyte A115 | nichthydriertes Kohlenwasserstoffharz | 15,00 % |
| Weichharz | Wingtack 10 | aliphatisches Kohlenwasserstoffharz | 3,50 % |
| Weitere Bestandteile | Kraton D1118 CS | Polystyrol-Polybutadien-Blockcopolymer | 10,00 % |
| | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 6 - erfindungsgemäß:**

| | | | Gew.-% |
|---|---|---|---|
| Elastomer | Kraton D1102 CS | Polystyrol-Polybutadien-Blockcopolymer | 38,00 % |
| Klebharz 1 | Regalite R7100 | teilhydriertes Kohlenwasserstoffharz | 37,00 % |
| Klebharz 2 | Regalite S5090 | teilhydriertes Kohlenwasserstoffharz | 10,00 % |
| Weichharz | Wingtack 10 | aliphatisches Kohlenwasserstoffharz | 3,50 % |
| Weitere Bestandteile | Kraton D1118 CS | Polystyrol-Polybutadien-Blockcopolymer | 10,00 % |
| | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 7 - Vergleich:**

| | | | Gew.-% |
|---|---|---|---|
| Elastomer | Kraton D1102 CS | Polystyrol-Polybutadien-Blockcopolymer | 30,00 % |
| Klebharz 1 | Regalite R7100 | teilhydriertes Kohlenwasserstoffharz | 47,00 % |
| Klebharz 2 | Arkon M90 | teilhydriertes Kohlenwasserstoffharz | 13,00 % |
| Weichharz | Wingtack 10 | aliphatisches Kohlenwasserstoffharz | 3,50 % |
| Weitere Bestandteile | Kraton D1118 CS | Polystyrol-Polybutadien-Blockcopolymer | 5,00 % |
| | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 8 - Vergleich:**

| | | | Gew.-% |
|---|---|---|---|
| Elastomer | Kraton D1118 CS | Polystyrol-Polybutadien-Blockcopolymer | 98,50 % |
| Klebharz 1 | -/- | | |
| Klebharz 2 | -/- | | |
| Weichharz | -/- | | |
| Weitere Bestandteile | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 9 - Vergleich:**

| | | | Gew.-% |
|---|---|---|---|
| Elastomer | Kraton D1165 PT | Polystyrol-Polyisopren-Blockcopolymer | 98,50 % |
| Klebharz 1 | -/- | | |
| Klebharz 2 | -/- | | |
| Weichharz | -/- | | |
| Weitere Bestandteile | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

**Beispiel 10 - Vergleich:**

| | | | Gew.-% |
|---|---|---|---|
| Elastomer | Kraton D1102 CS | Polystyrol-Polybutadien-Blockcopolymer | 98,50 % |
| Klebharz 1 | -/- | | |
| Klebharz 2 | -/- | | |
| Weichharz | -/- | | |
| Weitere Bestandteile | Tinuvin 571 | UV-Schutzmittel | 0,50 % |
| | Tinuvin 765 | Antioxidationsmittel | 0,50 % |
| | Irganox 3052 | Antioxidationsmittel | 0,50 % |

### Messwerte:

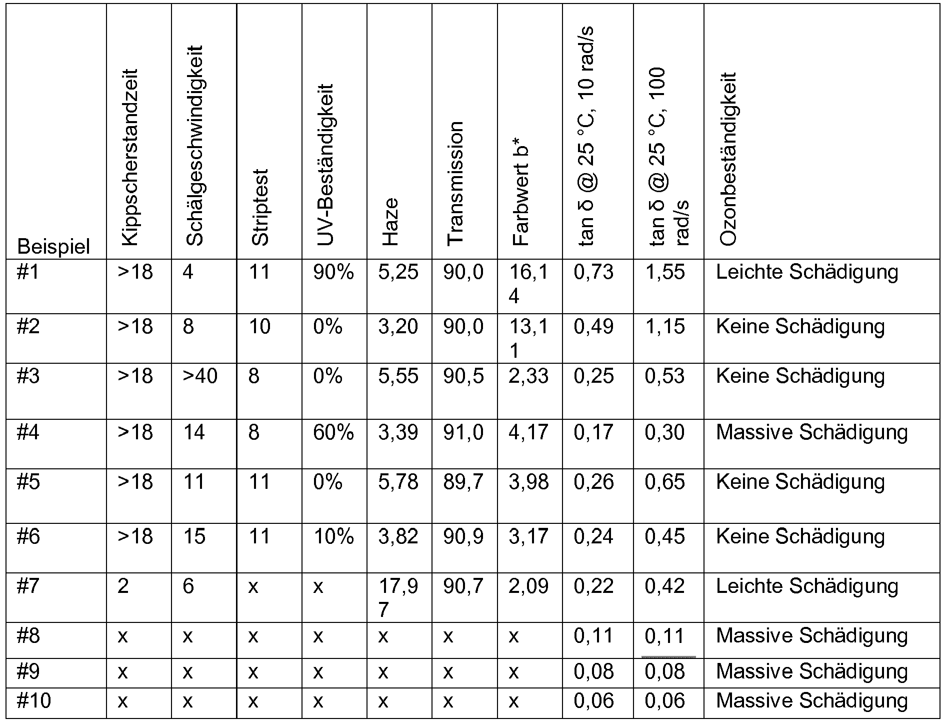

## Patentansprüche

1. Verwendung einer Haftklebemasse in einem ein- oder beidseitig klebenden Klebfolienstreifen, der trägerfrei und somit nur einlagig ausgeführt ist, wobei die Haftklebemasse zumindest enthält
(a) zumindest ein Elastomer, wobei das Elastomer einen Anteil von mindestens 40 Gew.-% bezogen auf die Klebemassenzusammensetzung aufweist und wobei als Elastomer zumindest eine Sorte eines Polybutadien-Blockcopolymers eingesetzt ist,
(b) zumindest ein teilhydriertes Kohlenwasserstoffharz (Harzsorte 1) mit einer Erweichungstemperatur von mindestens 90 °C,
(c) gegebenenfalls zumindest ein weiteres Kohlenwasserstoffharz, ein Terpenphenolharz und/oder ein Kolophoniumharz mit einer Erweichungstemperatur von mindestens 90 °C (Harzsorte 2),
(d) gegebenenfalls ein Weichharz mit einer Schmelzviskosität bei 25 °C und 1 Hz von zumindest 25 Pa*s und einer Erweichungstemperatur von < 25 °C,
(e) gegebenenfalls weitere Additive,
wobei der tan δ der Haftklebemasse bei Anwendungstemperatur (hier 25 °C) bei 10 rad/s bei mindestens 0,20 und bei 100 rad/s bei mindestens 0,40 liegt.

2. Verwendung einer Haftklebemasse in einem ein- oder beidseitig klebenden Klebfolienstreifen, der trägerfrei und somit nur einlagig ausgeführt ist, wobei die Haftklebemasse zumindest enthält
(a) zumindest ein Elastomer, wobei das Elastomer einen Anteil von mindestens 40 Gew.-% bezogen auf die Klebemassenzusammensetzung aufweist und wobei als Elastomer zumindest eine Sorte eines Polybutadien-Blockcopolymers eingesetzt ist,
(b) zumindest ein nicht hydriertes Kohlenwasserstoffharz (Harzsorte 1) mit einer Erweichungstemperatur von mindestens 90 °C,
(c) zumindest ein weiteres zumindest teilhydriertes oder disproportioniertes Kohlenwasserstoffharz, Terpenphenolharz und/oder Kolophoniumharz mit einer Erweichungstemperatur von mindestens 90 °C (Harzsorte 2),
(d) gegebenenfalls ein Weichharz mit einer Schmelzviskosität bei 25 °C und 1 Hz von zumindest 25 Pa*s und einer Erweichungstemperatur von < 25 °C,
(e)gegebenenfalls weitere Additive,
wobei der tan δ der Haftklebemasse bei Anwendungstemperatur (hier 25 °C) bei 10 rad/s bei mindestens 0,20 und bei 100 rad/s bei mindestens 0,40 liegt.

3. Verwendung einer Haftklebemasse nach Anspruch 1 oder 2,
**dadurch gekennzeichnet, dass**
der tan δ der Haftklebemasse bei Anwendungstemperatur (hier 25 °C) bei 10 rad/s bei höchstens 0,40 und bei 100 rad/s bei höchstens 1,00.

4. Verwendung einer Haftklebemasse nach zumindest einem der Ansprüche 1 bis 3,
**dadurch gekennzeichnet, dass**
der Anteil an dem Polybutadien-Blockcopolymer oder dem Gemisch aus verschiedenen Polybutadien-Blockcopolymeren am Elastomer mindestens 90 Gew.-% (bezogen auf die Elastomergesamtmenge) beträgt.

5. Verwendung einer Haftklebemasse nach zumindest einem der vorherigen Ansprüche,
**dadurch gekennzeichnet, dass**
zumindest ein Polybutadien-Blockcopolymer ein Triblockcopolymer oder ein höheres Multiblockcopolymer mit zumindest zwei A-Blöcken ist.

6. Verwendung einer Haftklebemasse nach zumindest einem der vorherigen Ansprüche,
**dadurch gekennzeichnet, dass**
die Polybutadien-Blockcopolymere einen Polyvinylaromatenanteil von 20 Gew.-% bis 40 Gew.-% auf, bevorzugt zwischen 25 Gew.-% und 35 Gew.-% aufweisen.

7. Verwendung einer Haftklebemasse nach zumindest einem der vorherigen Ansprüche,
**dadurch gekennzeichnet, dass**
der Anteil der Polybutadien-Blockcopolymere, insbesondere Polystyrol-Polybutadien-Blockcopolymere in Summe bezogen auf die gesamte Haftklebemasse mindestens 40 Gew.-%, bevorzugt mindestens 45 Gew.-% und der maximale Anteil der Polybutadien-Blockcopolymere, insbesondere Polystyrol-Polybutadien-Blockcopolymere, in Summe bezogen auf die gesamte Haftklebmasse maximal 60 Gew.-%, bevorzugt maximal 55 Gew.-% beträgt.

8. Verwendung einer Haftklebemasse nach zumindest einem der vorherigen Ansprüche,
**dadurch gekennzeichnet, dass**
als Elastomer ein Elastomergemisch eingesetzt wird, bestehend aus A-B-A-Triblockcopolymer und A-B-Diblockcopolymer, wobei bezogen auf die Gesamtelastomereinsatzmenge der Anteil an A-B-A-Triblockcopolymer mindestens 50 Gew.-%, bevorzugt mindestens 60 Gew.-% beträgt.

9. Verwendung einer Haftklebemasse nach zumindest einem der vorherigen Ansprüche,
**dadurch gekennzeichnet, dass**,
der Gesamtklebharzgehalt in der Haftklebemasse bei mindestens 30 Gew.-%, bevorzugt mindestens 40 Gew.-% und bei höchstens 60 Gew.-%, bevorzugt höchstens 50 Gew.-% liegt.

10. Verwendung einer Haftklebemasse nach zumindest einem der vorherigen Ansprüche,
**dadurch gekennzeichnet, dass**,
sofern es sich bei der Klebharzsorte 1 um ein teilhydriertes Klebharz handelt, der Anteil an der Klebharzsorte 1 mindestens 25 Gew.-% und höchstens 60 Gew.-%, bevorzugt mindestens 30 Gew.-% und höchstens 50 Gew.-% (bezogen auf die Klebmassezusammensetzung) beträgt oder
sofern es sich bei der Klebharzsorte 1 um ein nichthydriertes Klebharz handelt, der Anteil an der Klebharzsorte 1 mindestens 15 Gew.-% und höchstens 30 Gew.-%, bevorzugt mindestens 18 Gew.-% und höchstens 28 Gew.-% (bezogen auf die Klebmassezusammensetzung) beträgt.

11. Verwendung einer Haftklebemasse nach zumindest einem der vorherigen Ansprüche,
**dadurch gekennzeichnet, dass**,
der Anteil an Weichharz oder Weichharzgemisch zwischen 0 Gew.-% und 6 Gew.-% bezogen auf die Gesamtklebemassezusammensetzung liegt.

12. Verwendung eines ein- oder beidseitig klebenden Klebfolienstreifens, der trägerfrei und somit nur einlagig ausgeführt ist, aus einer Haftklebemasse wie in einem der Ansprüche 1 bis 11 definiert zur Verklebung eines Gegenstands auf einer hydrophilen Oberfläche.

13. Verwendung eines ein- oder beidseitig klebenden Klebfolienstreifens, der trägerfrei und somit nur einlagig ausgeführt ist, aus einer Haftklebemasse wie in einem der Ansprüche 1 bis 11 definiert in einem Verbund, wobei der Klebestreifen zwischen zwei Substraten verklebt ist, von denen zumindest eines transparent ist und/oder ein Substrat so ausgebildet ist, dass eine Last daran befestigt werden kann.

## Claims

1. Use of a pressure-sensitive adhesive in a single-or double-sidedly bonding adhesive-sheet strip, which is carrier-free and hence of only single-ply configuration, wherein the pressure-sensitive adhesive at least comprises
(a) at least one elastomer, the elastomer having a fraction of at least 40 wt%, based on the adhesive composition, and elastomer used comprising at least one kind of a polybutadiene block copolymer,
(b) at least one partly hydrogenated hydrocarbon resin (resin kind 1) having a softening temperature of at least 90°C,
(c) optionally at least one further hydrocarbon resin, a terpene-phenolic resin and/or a rosin having a softening temperature of at least 90°C (resin kind 2),
(d) optionally a plasticizing resin having a melt viscosity at 25°C and 1 Hz of at least 25 Pa*s and a softening temperature of < 25°C,
(e) optionally further additives,
wherein the tan δ of the pressure-sensitive adhesive at application temperature (here 25°C) at 10 rad/s is at least 0.20 and at 100 rad/s is at least 0.40.

2. Use of a pressure-sensitive adhesive in a single-or double-sidedly bonding adhesive-sheet strip, which is carrier-free and hence of only single-ply configuration, wherein the pressure-sensitive adhesive at least comprises
(a) at least one elastomer, the elastomer having a fraction of at least 40 wt%, based on the adhesive composition, and elastomer used comprising at least one kind of a polybutadiene block copolymer,
(b) at least one nonhydrogenated hydrocarbon resin (resin kind 1) having a softening temperature of at least 90°C,
(c) at least one further at least partly hydrogenated or disproportionated hydrocarbon resin, terpene-phenolic resin and/or rosin having a softening temperature of at least 90°C (resin kind 2),
(d) optionally a plasticizing resin having a melt viscosity at 25°C and 1 Hz of at least 25 Pa*s and a softening temperature of < 25°C,
(e) optionally further additives,
wherein the tan δ of the pressure-sensitive adhesive at application temperature (here 25°C) at 10 rad/s is at least 0.20 and at 100 rad/s is at least 0.40.

3. Use of a pressure-sensitive adhesive according to Claim 1 or 2,
**characterized in that**
the tan δ of the pressure-sensitive adhesive at application temperature (here 25°C) at 10 rad/s is not more than 0.40 and at 100 rad/s is not more than 1.00.

4. Use of a pressure-sensitive adhesive according to at least one of Claims 1 to 3,
**characterized in that**
the fraction of the polybutadiene block copolymer or of the mixture of different polybutadiene block copolymers in the elastomer is at least 90 wt% (based on the total elastomer amount).

5. Use of a pressure-sensitive adhesive according to at least one of the preceding claims,
**characterized in that**
at least one polybutadiene block copolymer is a triblock copolymer or a higher multiblock copolymer having at least two A blocks.

6. Use of a pressure-sensitive adhesive according to at least one of the preceding claims,
**characterized in that**
the polybutadiene block copolymers have a polyvinylaromatic fraction of 20 wt% to 40 wt%, preferably between 25 wt% and 35 wt%.

7. Use of a pressure-sensitive adhesive according to at least one of the preceding claims,
**characterized in that**
the fraction of the polybutadiene block copolymers, more particularly polystyrene-polybutadiene block copolymers, in total, based on the overall pressure-sensitive adhesive, is at least 40 wt%, preferably at least 45 wt%, and the maximum fraction of the polybutadiene block copolymers, more particularly polystyrene-polybutadiene block copolymers, in total, based on the overall pressure-sensitive adhesive, is not more than 60 wt%, preferably not more than 55 wt%.

8. Use of a pressure-sensitive adhesive according to at least one of the preceding claims,
**characterized in that**
elastomer used comprises an elastomer mixture consisting of A-B-A triblock copolymer and A-B diblock copolymer, the fraction of A-B-A triblock copolymer, based on the total amount of elastomer used, being at least 50 wt%, preferably at least 60 wt%.

9. Use of a pressure-sensitive adhesive according to at least one of the preceding claims,
**characterized in that**
the total tackifying resin content in the pressure-sensitive adhesive is at least 30 wt%, preferably at least 40 wt%, and not more than 60 wt%, preferably not more than 50 wt%.

10. Use of a pressure-sensitive adhesive according to at least one of the preceding claims,
**characterized in that**
where tackifying resin kind 1 is a partially hydrogenated tackifying resin, the fraction of tackifying resin kind 1 is at least 25 wt% and not more than 60 wt%, preferably at least 30 wt% and not more than 50 wt% (based on the adhesive composition), or
where tackifying resin kind 1 is a nonhydrogenated tackifying resin, the fraction of tackifying resin kind 1 is at least 15 wt% and not more than 30 wt%, preferably at least 18 wt% and not more than 28 wt% (based on the adhesive composition).

11. Use of a pressure-sensitive adhesive according to at least one of the preceding claims,
**characterized in that**
the fraction of plasticizing resin or plasticizing resin mixture is between 0 wt% and 6 wt%, based on the total adhesive composition.

12. Use of a single- or double-sidedly bonding adhesive-sheet strip, which is carrier-free and hence of only single-ply configuration, consisting of a pressure-sensitive adhesive as defined in one of Claims 1 to 11 for bonding an article to a hydrophilic surface.

13. Use of a single- or double-sidedly bonding adhesive-sheet strip, which is carrier-free and hence of only single-ply configuration, consisting of a pressure-sensitive adhesive as defined in one of Claims 1 to 11 in a bonded assembly, the adhesive strip being bonded between two substrates, of which at least one is transparent and/or one substrate is designed in such a way that a load can be affixed thereto.

## Revendications

1. Utilisation d'une masse adhésive de contact dans une bande adhésive simple ou double face, qui est sans support et par conséquent uniquement configurée à une couche, la masse adhésive de contact contenant au moins :
(a) au moins un élastomère, l'élastomère présentant une proportion d'au moins 40 % en poids par rapport à la composition de masse adhésive et au moins un type de copolymère séquencé de polybutadiène étant utilisé en tant qu'élastomère,
(b) au moins une résine hydrocarbonée partiellement hydrogénée (type de résine 1) ayant une température de ramollissement d'au moins 90 °C,
(c) éventuellement au moins une autre résine hydrocarbonée, une résine de terpène-phénol et/ou une résine de colophane ayant une température de ramollissement d'au moins 90 °C (type de résine 2),
(d) éventuellement une résine molle ayant une viscosité à l'état fondu à 25 °C et 1 Hz d'au moins 25 Pa*s et une température de ramollissement < 25 °C,
(e) éventuellement d'autres additifs,
le tan δ de la masse adhésive de contact à la température d'utilisation (ici 25 °C) à 10 rad/s étant d'au moins 0,20 et à 100 rad/s d'au moins 0,40.

2. Utilisation d'une masse adhésive de contact dans une bande adhésive simple ou double face, qui est sans support et par conséquent uniquement configurée à une couche, la masse adhésive de contact contenant au moins :
(a) au moins un élastomère, l'élastomère présentant une proportion d'au moins 40 % en poids par rapport à la composition de masse adhésive et au moins un type de copolymère séquencé de polybutadiène étant utilisé en tant qu'élastomère,
(b) au moins une résine hydrocarbonée non hydrogénée (type de résine 1) ayant une température de ramollissement d'au moins 90 °C,
(c) au moins une autre résine hydrocarbonée au moins partiellement hydrogénée ou dismutée, une résine de terpène-phénol et/ou une résine de colophane ayant une température de ramollissement d'au moins 90 °C (type de résine 2),
(d) éventuellement une résine molle ayant une viscosité à l'état fondu à 25 °C et 1 Hz d'au moins 25 Pa*s et une température de ramollissement < 25 °C,
(e) éventuellement d'autres additifs,
le tan δ de la masse adhésive de contact à la température d'utilisation (ici 25 °C) à 10 rad/s étant d'au moins 0,20 et à 100 rad/s d'au moins 0,40.

3. Utilisation d'une masse adhésive de contact selon la revendication 1 ou 2, **caractérisée en ce que** le tan δ de la masse adhésive de contact à la température d'utilisation (ici 25 °C) à 10 rad/s est d'au plus 0,40 et à 100 rad/s d'au plus 1,00.

4. Utilisation d'une masse adhésive de contact selon au moins l'une quelconque des revendications 1 à 3, **caractérisée en ce que** la proportion du copolymère séquencé de polybutadiène ou du mélange de différents copolymères séquencés de polybutadiène dans l'élastomère est d'au moins 90 % en poids (par rapport à la quantité totale d'élastomères).

5. Utilisation d'une masse adhésive de contact selon au moins l'une quelconque des revendications précédentes, **caractérisée en ce qu'**au moins un copolymère séquencé de polybutadiène est un copolymère triséquencé ou un copolymère multiséquencé supérieur contenant au moins deux séquences A.

6. Utilisation d'une masse adhésive de contact selon au moins l'une quelconque des revendications précédentes, **caractérisée en ce que** les copolymères séquencés de polybutadiène présentent une proportion de composés aromatiques de polyvinyle de 20 % en poids à 40 % en poids, de préférence comprise entre 25 % en poids et 35 % en poids.

7. Utilisation d'une masse adhésive de contact selon au moins l'une quelconque des revendications précédentes, **caractérisée en ce que** la proportion des copolymères séquencés de polybutadiène, notamment des copolymères séquencés de polystyrène-polybutadiène, est au total par rapport à la masse adhésive de contact totale d'au moins 40 % en poids, de préférence d'au moins 45 % en poids, et la proportion maximale des copolymères séquencés de polybutadiène, notamment des copolymères séquencés de polystyrène-polybutadiène, est au total par rapport à la masse adhésive de contact totale d'au plus 60 % en poids, de préférence d'au plus 55 % en poids.

8. Utilisation d'une masse adhésive de contact selon au moins l'une quelconque des revendications précédentes, **caractérisée en ce qu'**un mélange d'élastomères est utilisé en tant qu'élastomère, constitué d'un copolymère triséquencé A-B-A et d'un copolymère diséquencé A-B, la proportion du copolymère triséquencé A-B-A par rapport à la quantité d'élastomères utilisée au total étant d'au moins 50 % en poids, de préférence d'au moins 60 % en poids.

9. Utilisation d'une masse adhésive de contact selon au moins l'une quelconque des revendications précédentes, **caractérisée en ce que** la teneur totale en résine adhésive dans la masse adhésive de contact est d'au moins 30 % en poids, de préférence d'au moins 40 % en poids et d'au plus 60 % en poids, de préférence d'au plus 50 % en poids.

10. Utilisation d'une masse adhésive de contact selon au moins l'une quelconque des revendications précédentes, **caractérisée en ce que** si le type de résine adhésive 1 est une résine adhésive partiellement hydrogénée, la proportion du type de résine adhésive 1 est d'au moins 25 % en poids et d'au plus 60 % en poids, de préférence d'au moins 30 % en poids et d'au plus 50 % en poids (par rapport à la composition de masse adhésive), ou
si le type de résine adhésive 1 est une résine adhésive non hydrogénée, la proportion du type de résine adhésive 1 est d'au moins 15 % en poids et d'au plus 30 % en poids, de préférence d'au moins 18 % en poids et d'au plus 28 % en poids (par rapport à la composition de masse adhésive).

11. Utilisation d'une masse adhésive de contact selon au moins l'une quelconque des revendications précédentes, **caractérisée en ce que** la proportion de résine molle ou de mélange de résines molles est comprise entre 0 % en poids et 6 % en poids, par rapport à la composition de masse adhésive totale.

12. Utilisation d'une bande adhésive simple ou double face, qui est sans support et par conséquent uniquement configurée à une couche, à base d'une masse adhésive de contact telle que définie dans l'une quelconque des revendications 1 à 11, pour le collage d'un objet sur une surface hydrophile.

13. Utilisation d'une bande adhésive simple ou double face, qui est sans support et par conséquent uniquement configurée à une couche, à base d'une masse adhésive de contact telle que définie dans l'une quelconque des revendications 1 à 11, dans un composite, la bande adhésive étant collée entre deux substrats, parmi lesquels au moins un est transparent et/ou un substrat est configuré de sorte qu'une charge puisse être fixée sur celui-ci.
